(19)

Europäisches
Patentamt
European
Patent Office
Office européen
des brevets

(11) **EP 2 081 191 A1**

(12) **EUROPEAN PATENT APPLICATION**

(43) Date of publication:
**22.07.2009 Bulletin 2009/30**

(51) Int Cl.:
**G11B 23/28** *(2006.01)* **G09F 3/00** *(2006.01)*
**G08B 13/24** *(2006.01)*

(21) Application number: **08380010.2**

(22) Date of filing: **21.01.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (71) Applicant: **Tecnicas Pantra S.L.**<br>**28019 Madrid (ES)**<br><br>(72) Inventor: **Vicente Mayor, Segundo**<br>**28019 Madrid (ES)** |

(54) **Non symmetric devices with alarms for compact discs and similar articles**

(57)     Non symmetric devices with alarms for compact discs and similar articles. Devices comprise an assembly of an annular support sheet which carries anti-theft alarm elements markers for electromagnetic systems, which can be activated and deactivated and are arranged perpendicular to each other but whose weight, length, placement and shape are dissimilar and asymmetric to each other and whose center of mass balance is calculated according to the levers formula.

FIG. 1

## Description

The present invention relates to non symmetric devices with alarms for compact discs protection against theft or non approved removal from an approved area where they are placed to other area to be used in Compact discs(CD) optical discs(OD), digital video discs (DVD) or CDRoms and similar products protection.

There exists today several designated "Electronic Article Surveillance" (EAS) systems which are quoted in paragraphs below only to mark the limits in the scope of the present invention. Such systems can be radiofrequency (RF) systems, acousto-magnetic(AM) systems, radio frequency identification (RFID) systems or electro-magnetic(EM) systems. These systems are not described here in detail. In short, their main components are:

> a - detection equipment, commonly named as alarm gates and
> b - small alarm labels, also named tags or markers, which are attached by means of different sorts of adhesives suitable to the surface of the article where they are going to bonded or are embedded to those articles to be protected and which can be detected by detection gates when they are passed through them.

The present invention relates to specific devices of alarm labels, tags or markers for electro-magnetic (EM) systems. EM systems are a practical sequence of the Barhausen effect for the safety of articles. These EM systems are widespread in most countries and their technique and detection equipment are not an aim of the present invention. With regards to EM systems, several patents have been developed. It could be quoted the US3790945(Fearon, Edward),US4016553(Knogo Corp.), US4686516 (Sensormatic Electronics Corp.) and US5003291 (Strom-Olsen, John O) patents.

The present invention relates to non symmetric devices of alarm labels, tags or markers specially designed for electro-magnetic(EM) systems. With regard to markers which work with EM systems there are several patents. Just to mention some of them which may be relevant for example, EP0446910, GB2322049, EP0122326 and FR2621156 patents. They are aimed for markers of electromagnetic systems where markers can be activated and deactivated. Such markers are made with soft magnetic metal wire (amorphous) and several hard magnetic metal plates, placed at regular intervals, contiguous and attached to the soft metallic material and this combination (ensamble) bonded to each other with an adhesive and both of them to a support material or substrate (frequently mentioned support materials are plastics or paper as they are most commonly used) to form a marker element or alarm label. Markers are commonly covered with a liner sheet which protects the adhesive side of the marker before the alarm label or marker will be bonded to the article which is going to be protected, as it happens usually with ordinary labels which are bonded to different articles for different uses. Markers for EM systems can be made only by a soft magnetic metal wire which can be detected by EM gates. In this case these markers cannot be deactivated.

For CDs and similar articles, because of their special characteristics, several different solutions have been established for the design of markers for CD protection. They are usually starting with practical applications of previous designs for markers or alarm labels, in some cases made of soft magnetic metal materials or these materials in combination with hard magnetic metal materials to form non-deactivatable markers or deactivateble markers respectively. Examples of such solutions are:

> 1.- Markers embedded in the body of the CD, as in DE4242992 and DE4440314 (Cosnard) patents.
> 2.- To place markers on top of the CD, also mentioned in DE4242992 and DE4440314.

In these two patents, markers are placed in such a way that the center of mass which is placed in the centre of the central opening of the CD has not been moved after positioning of markers on or in the CD. Several solutions are shown to this end result. For example, to place markers in a parallel position on both sides of the central opening, leaving the central opening of the CD in the centre of the resulting form; also to place a pair of two parallel markers and other pair of two parallel markers in a form of a quadrangle; placing markers in a circle around the central opening; placing the markers in the form of an equilateral triangle which surrounds the CD central opening. But in both patents it is pointed out that the sides of the resulting geometric forms can be made of soft magnetic metal wire in an unbroken line or there can be discontinuity in their end parts, as long as the principle that the center of mass of the CD will be kept in the same place centre of the CD when the marker is placed in or on the CD. The DE4440314 patent specifies that a discontinuous side of the marker can be used to support some sort of information, written of some other sort. The price is quoted as an example. In these patents: a.- It is described extensively that markers are embedded in the CD or b.- that, otherwise, are on/on top of the CD. And, in both cases, it is specifically said that markers are protected with a sheet (which can be made of different materials, as no specific material is particularly mentioned) which is placed on top of them and which keeps them bonded in a permanent way to the CD. It was known for an expert in the matter, as it can be seen in the quotation below here of GB2322049 (EP0839330) patent, that if it is mentioned in the state of the technique to the particular application in case of CDs and similar articles, if the adhesive sheet or substrate on these markers has a permanent adhesive with enough adhesive tack, these markers will constitute a device on or on top of the CD which will not be able to be separated from the CD without a very dangerous risk of destruction of the CD (all or part of the printing side of the CD and its recordable layer under it will peel off while trying to remove the marker), and in a consequence to it, when the marker is placed on the CD, the end product can be considered a definitive and unique product for all practical purposes. Besides, it is specified in this patents DE4242992 and DE 4440314, for all its solutions the need to keep the center of mass of markers in the center of mass of the CD. It is mentioned that markers are placed at symmetrical distances from the CD centre.

Then it can be seen that, in DE4242992, DE4440314 and EP0628936 (see below) patents, several concrete solutions have been established to a general principle of keeping center of mass of the marker applied to the CD in the same center of mass of the CD when said CD or similar article was manufactured. It is also implied it these patents that center of mass of the marker is situated in the geometrical centre of the marker.

In these mentioned patents a symmetrical distribution of markers around the centre of mass of the CD is necessary for the desired equilibrium of center of mass, but alternatively other solutions or devices can be found as it will be shown in the drawings of this invention, the non symmetric devices, which are different to those solutions mentioned above and which can be designed in an non symmetric way for specific advantages. And in other cases where the general principle of keeping the center of mass in the same geometrical centre of the device will not be kept, other solutions for markers may have other detection advantages which also will be the aim of the present invention.

Another patent which specifies as its aim to keep the center of mass in the centre of the CD circle and the centre of the CD marker is the EP628936 where the marker is attached to the compact disc and in this patent several specific geometric forms for it are shown. In this patent the soft magnetic metal for markers is in a continuous piece, it is a single piece, and it can adopt the shape of a ring, a square or of a triangle. And it explains that markers can be preferably (but not exclusively, as it can be also attached) incorporated into the disc body.

In patent GB2322049 (EP0839330) a different terminology is used to name the soft magnetic metal material and to name the hard magnetic metal material of markers, but when it deals with placement of different markers or inside or on top of or over the object or article to be protected, it explains that markers can be attached to a substrate (be it made of plastic or made of paper) or markers be embedded into the structure or mass of the article to be protected. Because it may be considered relevant to the state of the technique it is quoted literally here, from its description pages (page 3,lines 28 to 36 and page 4, lines 1 to 4): *"Since the magnetic material can be in the form of a thin foil, wire or film, it can be bonded directly to a substrate, e.g. paper or plastics material, to form self-supporting tags. Alternatively, the magnetic material may be incorporated into the structure of an article with which the tag is to be associated; thus a tag may be formed in situ with the article in question by applying the magnetic material to the surface of the article, or by embedding the magnetic material within the body of the article".*

This paragraph states clearly the two ways for alarm devices to be applied to an article: Inside the mass of the article or attached to it with an adhesive.

With reference to the present invention dealing with CD makers. It follows from the paragraph above that in the state of the technique of patent GB2322049 it was taken for granted that an expert in the technique markers for CD and similar articles, in such a case as patent DE4242992 and DE4440314 where markers can be embedded in the body of the CD or on/on top of the CD, such markers could be bonded to a substrate (will it be a sheet of plastic or other material) and attached later to the surface of the CD or the magnetic material embedded in the body of the CD. Essential to it is the specific way which keeps the balance of the center of mass of the CD or a similar by means of specific symmetric geometric forms. In patent DE 4440314 it is mentioned specifically that part of the marker can be used as support of some sort of information (e.g. price).

Patent FR2621156 also quotes two methods to place markers: Attached to the article with an adhesive (more or less strong) or embedded in the body of the article.

On top of it, several patents have been entered for devices to protect the side of CDs which has printed information (silk printing or other) of CD title, author or other information.

Patent EP0599655 describes a transparent, circular covering device for CDs, with a ring shape complementary to that side of the CD. A permanent adhesive has been applied to one of its sides, and this side is protected with a liner which can be peeled off. One object or aim of this device is to be attached in some cases in a permanent way to the serigraphy or print side of a CD and to avoid damages such as scratches. This cover and its liner would have a central hole complementary to the central hole of a standard CD. When this device is provided with a permanent adhesive it provides protection which would form a permanent unit with the actual CD. Patent GB2290526 also describes a cover protection which, along with other uses it is used to keep a marker device on the serigraphy side of a CD so that such a marker cannot be pulled off it without damage to the CD, and thus a protective cover will be achieved which will constitute a permanent unity with such CD.

Standard commercial laminates of different normal plastics are used for the production of these cover devices and they are also commonly used to manufacture very different types of labels which have already built in plastic material, including adhesives and liners. Practically all manufacturers of laminates for labels have these models in their stock catalogue, and so only the most well known brands are quoted here, like Avery-Dennison-Fasson, Mactac, Raflatac or RiTrama. The preferred laminates for the present invention are transparent, permanent adhesive laminated, whose liner has a lengthwise cut or cuts so that this liner can be disposed off more easily when labels, independently of their use, will be attached to the articles which they are aimed for.

The non symmetric devices described in the present invention have the innovative quality that, in some preferred embodiments, at the same time they keep the equilibrium of the CD in the center of mass which it had when it was manufactured, because of the particular position and place where the magnetic metal wire is placed in the marker, you can obtain a sensible improvement in the detection of such markers when they pass from an authorised area to a non authorised area through detection gates for EM markers. In a considerable proportion of the EM detection gates, which are based in the Barkhausen effect, it happens that magnetic metal wire of markers, when they are aligned parallel to the magnetic lines which are emitted by the emission post of gates, then the alarm labels or markers are not detected or are detected less than is required. On top of this, there are usually shadow areas between the detection posts , areas where some of the preferred embodiments of the devices of the present invention can help to improve the probability of a more frequent detection rate of alarm labels, because as the magnetic metal wire is not symmetrically or only in parallel lines attached to the substrate of the marker, but perpendicular to each other, then the metal wires or markers will be positioned across the direction of the electromagnetic lines. And this is obtained, in some of the preferred embodiments, without a need to change the centre of mass of the device or the center of mass of CDs or similar articles.

The non symmetric devices of the present invention use one or more magnetic metal wires of low soft or of low and hard magnetic metal, placed in a specific way which is shown here below in the description of the drawings and allow not only that markers will be detected in a higher probability by the detection gates as they are not parallel to each other, but at the same time they preserve the centre of mass on CDs or similar articles in the mass centre where they have been manufactured.

In other preferred embodiments of the non symmetric devices it can be obtained, by means of a specific arrangement, that with only one magnetic metal wire marker and with other pieces added to the annular suuport, pieces which can support relevant written information for the CD or for the user of the device, the centre of mass can be kept in the original place after the marker device has been attached to the CD. This written information can be barcodes, owner's name, users guide, only to mention some. Another advantage is that this part of the marker with information adhered to the annular protector can be manufactured in a simple cutting process at the same time that the whole marker device is manufactured. In the following lines, drawings of the present invention are described.

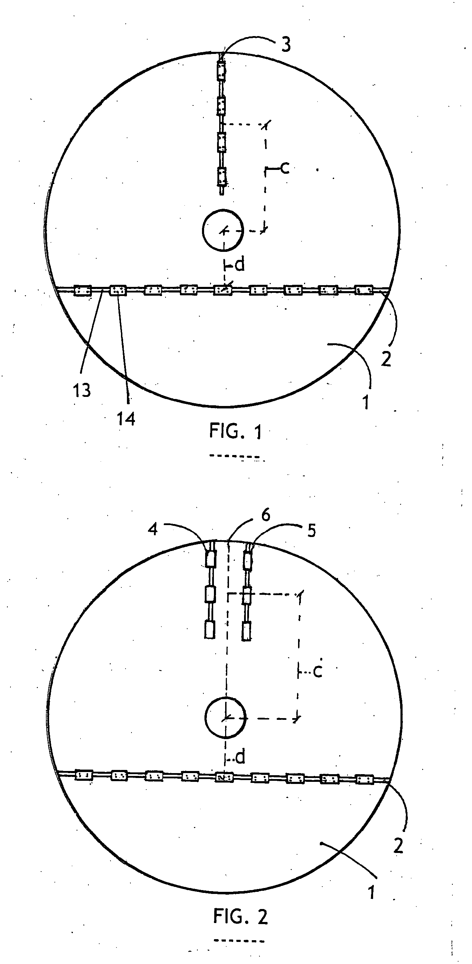

Figure 1 of the drawings show a preferred embodiment of the non symmetric device of the present invention. It shows that an annular circle(1) has attached a magnetic metal wire alarm marker following a chord of the circle (2).In an opposite side of the central opening of the annular circle and in a perpendicular diameter to the chord(2) it is placed a second magnetic metal wire alarm marker (3). This marker's (3) weight has been worked out to balance the weight of the marker (2), by means of the levers formula:

$$p1 = \frac{P.d.}{d1}$$

where
p1 is the weight of marker(3)
d is the distance of the centre of marker(2) to the centre of the annular circle(1)
P is the weight of marker (2)
d1 is the distance of the centre of marker(3) to the centre of the circle(1). Metal wire markers shown in this drawing are a low soft magnetic metal wire (13) and hard magnetic metal square plates on top of it (14)

Figure 2 of the drawings shows other preferred embodiment of the non symmetric device of the present invention. It shows that annular circle (1) has attached a metal wire marker which follows a chord of the circle (2) and on the other side of the central opening of the circle are placed two metal markers (4 and 5) on the same side of the circle parallel to each other and both at the same distance of a theoretical diameter (6) which would be perpendicular to the marker of the chord (2). These markers (4 and 5) have weight which is calculated to balance the weight of the marker (2) by means of the levers formula:

$$p1 = \frac{P.d}{d1}$$

where
p1 is the total weight of two markers (4 and 5)
d is the distance of the centre of marker (2) to the centre of the circle(1)
P is the weight of marker (2)
d1 is the distance of the center of mass of two parallel markers (4 and 5) to the centre of the circle (1) Markers shown here are same sort of metal as in figure 1

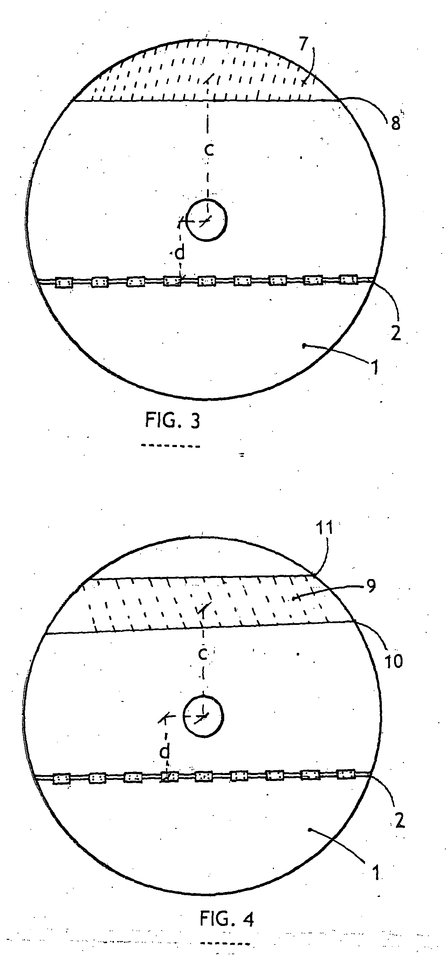

Figure 3 shows another preferred embodiment of the non symmetric device of the present invention where magnetic metal wire marker (2) which follows a chord to the annular circle (1) is balanced by a label (7) whose weight keeps the centre of mass in the same centre of the CD. This label (7) is in the form of a segment of circle, and is attached to the annular sheet (1) and its weight is equal to the weight which is necessary to balance the weight of the chord marker (2). This label (7) is able to carry printed or graphic information on the device, e.g. barcodes, numbers, written information of the use on the CD, name of owner of the CD. etc.

The weight p1 which is necessary to balance the weight of marker (2) will give the measure of the surface of label (7) and said weight will be calculated as above by means of the levers formula:

$$p1 = \frac{P.d}{d1}$$

where
p1 is the weight of label (7)
d is the distance of the centre of mass of chord marker (2) to the centre of the circule (1)
P is the weight of marker (2)
d1 is the distance of centre of mass of label (7) to the centre of circle (1)

Figure 4 of the drawings shows another preferred embodiment of non symmetric device of the present invention where magnetic metal wire marker(2) which follows the position of a chord of the annular circle (1) is balanced by a label (9) whose weight keeps the center of mass in the same centre of the CD. This label (9) has a form of a circular trapezium, is attached to the annular sheet (1) and is able to carry printed or graphic information on the device, for example barcodes, numbers, written information of the use of the CD, name of the owner, etc.

The weight p1 which is necessary to balance the weight of marker (2) will give the measure of surface of label (9) and said weight will be calculated by means of the levers formula:

$$p1 = \frac{P.d}{d1}$$

where

p1 is the total weight of label (9)
d is the distance of center of mass of the centre of chord marker (2) to the centre of the circle (1)
P is the weight of marker (2)
d1 is the distance of centre of mass of label (9) to the centre of circle (1)

Description of the drawings above and technical considerations of several patents quoted up to this point about labels with alarms or EM markers which have in view embodiments which will allow you to keep the centre of mass of CDs and similar articles in the same centre which they had when originally manufactured. But, alternatively it can be contemplated other dispositions of marker elements in a non symmetrical way on the CD annular label. These dispositions may change the centre of mass in the CD or similar articles and the EM annular CD protector device to be slightly unbalanced, but it can contribute with other advantages which may compensate this unbalance.

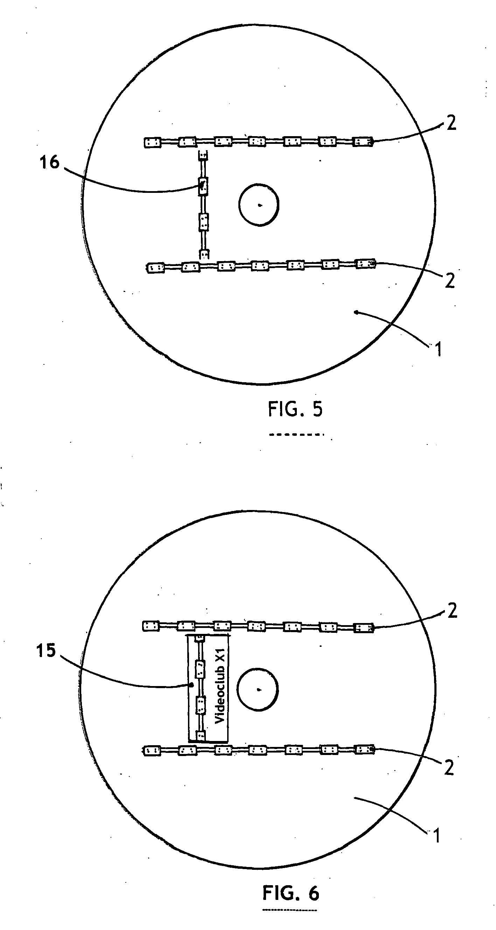

Figures 5, 6, 7 and 8 of the drawings show several non symmetric devices where magnetic metal wire markers have a disposition in the form of a capital H, where three independent metal wire markers, non continuous independent markers have been positioned on the annular support sheet and where a slight move of the centre of mass has taken place, but these are devices where an advantage can be obtained because the transverse marker (fig, 5-16) will be detected with less difficulty in the detector EM gates when the marker passes through them, as in this disposition any of the markers will not be parallel to the magnetic lines which are emitted by the emission post of the EM gates.

Figure 6 of the drawings shows a further embodiment of this device where the transverse marker (15) is used to be a label which can carry written information such as barcodes, name, numbers, etc.

Another consideration to be made about these embodiments of the EM non symmetric CD device, where the metal wire elements of the marker is placed in a form of capital H, is that, even if the geometric form of the metal wire markers is not balanced, the centre of mass of the CD may be kept in the same original spot after the CD marker has been placed on it, with a compensation of weight by means of the following dispositions:

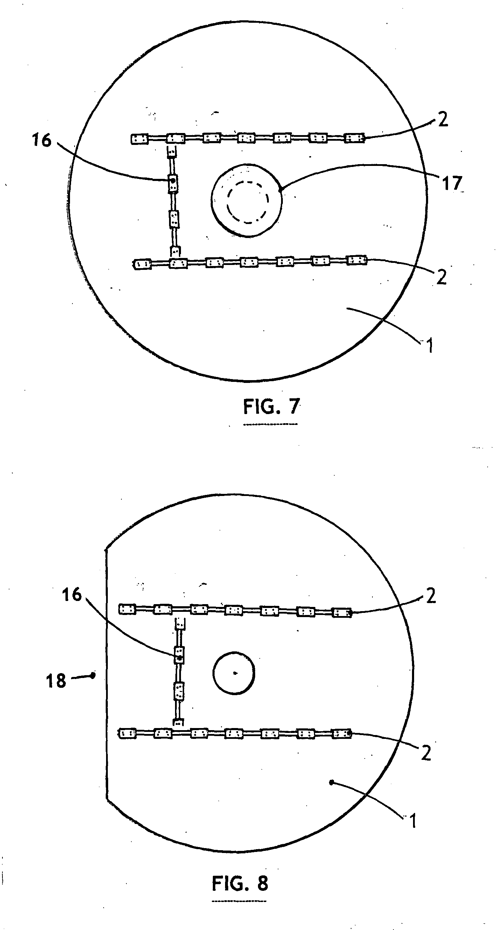

a - A central circular hole which has a diameter sensibly bigger (fig.7- 17) than the 15 mm diameter of the central hole and when the device is placed on the CD, a displacement of the CD device towards the opposite side of the transverse metal wire element of the capital H would compensate the balance weight in the resulting unit.
b - Other embodiment for the balance of this device of a capital H form of magnetic metal elements of the marker is represented in figure 8 of the drawings where a segment (18) has been cut in the annular sheet of the marker to equal the excess weight of the traverse metal element of the marker. In this embodiment the non symmetrical marker would not be a complete annular device as a segment would be cut off the annular circle.

**Claims**

1.  A non symmetrical device with alarms for compact discs and similar articles, which is **characterised by** being an assembly of a substrate sheet which has a shape of a annular circle which has a central circular opening whose diameter is similar to that of a standard compact disc and said substrate has attached with adhesive
    a first magnetic metal wire alarm marker element which follows a chord line of the annular circle on one side of the central circular opening of the substrate sheet and which is able to be detected by an electromagnetic detection system and said substrate sheet has attached
    a second element to balance said first chord element marker, which consists of a magnetic metal wire alarm marker element perpendicular to said first chord marker element on the opposite side of the central opening and which follows a diameter perpendicular to said first chord marker and in such disposition as to be able to keep the equilibrium in the centre of said annular device according to the lever formula and such side of substrate sheet is provided with a pressure adhesive.

2.  A non symmetrical device with alarms for compact discs and similar articles as claimed in claim 1 **characterised by** the second element to balance said first chord element marker consists of an arrangement of two markers parallel to each other, which follow the direction and are placed at both sides of the theoretical line of the diameter perpendicular to said first chord marker and that such a second arrangement consists of two element markers not separated from each other by more than 14 mms and whose weight is calculated according to the lever formula to keep the balance in the centre of said annular device.

3.  A non symmetrical device with alarms for compact discs and similar articles as claimed in claim 1 **characterised by** the second element to balance said first chord element marker in the opposite side of the central circular opening is a label able to carry printed information which balances the weight of said first chord element marker according to the lever formula.

4.  A non symmetric device with alarms for compact discs and similar articles as claimed in claim 3 **characterised by** the balancing label is a segment of annular circle whose base is the chord of the annular circle sheet.

5.  A non symmetric device with alarms for compact discs and similar articles as claimed in claim 3 **characterised by** the balancing label is a circular trapezium form band whose two bases are chords of the annular circle sheet.

6.  A non symmetric device with alarms for compact discs and similar articles **characterised by** the annular substrate sheet has attached an arrangement of three magnetic metal wire element markers elements independent of each other which are in a form of a capital H two parallel to each other on the opposite sides of the central opening and other odd magnetic marker element across the direction of the said two first
    magnetic marker elements whose weight is not balanced in the centre of the annular sheet.

7.  A non symmetric device with alarms for compact discs and similar objects as claimed in claim 6 **characterised by** a segment of the annular sheet has been removed at the same side of the odd magnetic marker element to balance the weight and to keep the centre of mass in the centre of the annular sheet according to the lever formula.

8.  A non symmetric device with alarms for compact discs and similar articles as claimed in claim 6 **characterised by** the central opening of the annular circle has a diameter which is significantly higher and calculated in such a proportion that the non symmetric device on the compact can be attached to the compact disc or similar articles in such a way that its unbalance caused by the odd across magnetic marker element can be compensated by the odd placement of the device slightly non concentric with the central opening of the CDs or similar articles.

9.  A non symmetric device with alarms for compact discs and similar articles as claimed in claim 6 **characterised by** the odd magnetic element marker can be used as a support label for printed information.

FIG. 1

FIG. 2

FIG. 3

FIG. 4

FIG. 5

FIG. 6

FIG. 7

FIG. 8

**European Patent Office**

**EUROPEAN SEARCH REPORT**

Application Number

EP 08 38 0010

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | DE 42 42 992 A1 (ESSELTE METO INT GMBH [DE] METO INTERNATIONAL GMBH [DE]) 23 June 1994 (1994-06-23) | 1 | INV. G11B23/28 G09F3/00 G08B13/24 |
| Y | * the whole document * | 2-9 | |
| Y | US 6 097 291 A (TSAI CHING-LONG [US] ET AL) 1 August 2000 (2000-08-01) * the whole document * | 2-9 | |
| A,D | DE 44 40 314 A1 (ESSELTE METO INT GMBH [DE]) 15 May 1996 (1996-05-15) * the whole document * | 1 | |

**TECHNICAL FIELDS SEARCHED (IPC)**

G08B
G09F
G11B

The present search report has been drawn up for all claims

| Place of search | Date of completion of the search | Examiner |
|---|---|---|
| The Hague | 30 June 2008 | Sozzi, Roberto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 38 0010

This annex lists the patent family members relating to the patent documents cited in  the above-mentioned European search report.
The members are as contained in the European Patent Office EDP file on
The European Patent Office is in no way liable for these particulars which are merely given for the purpose of information.

30-06-2008

| Patent document cited in search report | | Publication date | Patent family member(s) | Publication date |
|---|---|---|---|---|
| DE 4242992 | A1 | 23-06-1994 | NONE | |
| US 6097291 | A | 01-08-2000 | NONE | |
| DE 4440314 | A1 | 15-05-1996 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3790945 A
- US 4016553 A
- US 4686516 A
- US 5003291 A
- EP 0446910 A
- GB 2322049 A
- EP 0122326 A
- FR 2621156

- DE 4242992
- DE 4440314
- EP 0839330 A
- EP 0628936 A
- EP 628936 A
- EP 0599655 A
- GB 2290526 A